# EUROPEAN PATENT APPLICATION

(11) **EP 4 648 163 A1**
(43) Date of publication of application: **12.11.2025**
(21) Application number: 23914721.8
(22) Date of filing: 14.11.2023
(51) Int. Cl.: H01M 10/0565, H01B 1/06, H01B 1/10, H01M 4/38, H01M 10/052, H01M 10/056, H01M 10/0562

(54) **LITHIUM-ION CONDUCTIVE MATERIAL, LITHIUM-ION SECONDARY BATTERY, AND METHOD FOR PRODUCING LITHIUM-ION CONDUCTIVE MATERIAL**

(30) Priority: 04.01.2023 JP 2023000235
(71) Applicant: TOYOTA JIDOSHA KABUSHIKI KAISHA, Toyota-shi Aichi 471-8571 (JP)
(72) Inventor: NAKAMOTO, Hirofumi, Toyota-shi, Aichi 471-8571 (JP); MURASE, Ryuichi, Toyota-shi, Aichi 471-8571 (JP)
(74) Representative: D Young & Co LLP
(86) International application number: PCT/JP2023/040891
(87) International publication number: WO 2024/147233

(57) **Abstract**

Disclosed is a lithium ion conducting material excellent in lithium ion input/output characteristics. The lithium ion conducting material of the present disclosure comprises a composite of a polymer and an electrolytic solution. The electrolytic solution comprises a cyclic carbonate as a solvent and a lithium amide salt dissolved in the cyclic carbonate. A molar ratio of the lithium amide salt to the cyclic carbonate is greater than 0.25 and 0.33 or less.

## Description

### FIELD

The present application discloses a lithium ion conducting material, a lithium ion secondary battery, and a method for manufacturing a lithium ion conducting material.

### BACKGROUND

PTL 1 discloses an electrolytic solution for lithium ion secondary batteries, comprising a nonaqueous solvent and a lithium salt, wherein the nonaqueous solvent is contained in an amount of 3 mol or less per mol of the lithium salt. PTL 2 discloses an electrolytic solution for lithium ion secondary batteries, containing a predetermined solvent, a lithium imide salt, and at least one element of Group 1 elements and Group 2 elements, wherein a molar ratio of the lithium imide salt to the solvent is 1:0.8 to 1:2.0. PTL 3 discloses an electrolytic solution, comprising a chain carbonate, an unsaturated cyclic carbonate, and a lithium salt, wherein the lithium salt is contained at a concentration of 1.1 to 3.8 mol/L.

### [CITATION LIST]

### [PATENT LITERATURE]

[PTL 1] Japanese Unexamined Patent Publication No. 2016-122657
[PTL 2] Japanese Unexamined Patent Publication No. 2019-096463
[PTL 3] International Publication No. WO 2017/179682

### SUMMARY

### [TECHNICAL PROBLEM]

There is a room for improvement on the conventional lithium ion conducting materials in terms of lithium ion input/output characteristics.

### [SOLUTION TO PROBLEM]

As means for solving the above problem, the present application discloses a plurality of aspects below.

### <Aspect 1>

A lithium ion conducting material, comprising a composite of an electrolytic solution and a polymer, wherein
the electrolytic solution comprises a cyclic carbonate as a solvent and a lithium amide salt dissolved in the cyclic carbonate, and
a molar ratio of the lithium amide salt to the cyclic carbonate is greater than 0.25 and 0.33 or less.

### <Aspect 2>

The lithium ion conducting material according to Aspect 1, wherein the polymer is a fluoride-based polymer.

### <Aspect 3>

The lithium ion conducting material according to Aspect 1 or 2, comprising the composite and a sulfide solid electrolyte.

### <Aspect 4>

The lithium ion conducting material according to any of Aspects 1 to 3, wherein the cyclic carbonate is at least one of propylene carbonate and ethylene carbonate.

### <Aspect 5>

The lithium ion conducting material according to any of Aspects 1 to 4, wherein the lithium amide salt is at least one of lithium bisfluorosulfonylamide and lithium bistrifluoromethanesulfonylamide.

### <Aspect 6>

A lithium ion secondary battery, comprising a positive electrode active material layer, an electrolyte layer, and a negative electrode active material layer,
wherein at least one of the positive electrode active material layer, the electrolyte layer and the negative electrode active material layer comprises the lithium ion conducting material according to any of Aspects 1 to 5.

### <Aspect 7>

The lithium ion secondary battery according to Aspect 6, wherein at least the negative electrode active material layer comprises the lithium ion conducting material.

### <Aspect 8>

The lithium ion secondary battery according to Aspect 6 or 7, wherein the negative electrode active material layer comprises Si as a negative electrode active material.

### <Aspect 9>

A method for manufacturing a lithium ion conducting material, comprising forming a composite of an electrolytic solution and a polymer, wherein
the electrolytic solution comprises a cyclic carbonate as a solvent and a lithium amide salt dissolved in the cyclic carbonate, and
a molar ratio of the lithium amide salt to the cyclic carbonate is greater than 0.25 and 0.33 or less.

### <Aspect 10>

The manufacturing method according to Aspect 9, comprising:
mixing a diluent with the electrolytic solution and the polymer to obtain a solution; and
removing the diluent from the solution to form the composite of the electrolytic solution and the polymer.

### [EFFECTS OF INVENTION]

The lithium ion conducting material of the present disclosure is excellent in lithium ion input/output characteristics.

### BRIEF DESCRIPTION OF DRAWINGS

FIG. 1 schematically shows one example of a configuration of a lithium ion secondary battery.
FIG. 2 shows results of lithium ion conducting materials evaluated for thermal stability.
FIG. 3 shows results of lithium ion conducting materials evaluated for lithium ion transference number.
FIG. 4 shows results of lithium ion conducting materials evaluated for lithium ion conductivity.
FIG. 5 shows X-ray diffraction peaks of a sulfide solid electrolyte before and after immersion in each lithium ion conducting material.
FIG. 6 shows CV test results.
FIG. 7 shows the charge/discharge cycle dependence of Si interface resistance.
FIG. 8 shows XPS measurement results of Si electrodes after 10 charge/discharge cycles.

### DESCRIPTION OF EMBODIMENTS

### 1. Lithium Ion Conducting Material

The lithium ion conducting material of the present disclosure comprises a composite of an electrolytic solution and a polymer. The electrolytic solution comprises a cyclic carbonate as a solvent and a lithium amide salt dissolved in the cyclic carbonate. A molar ratio of the lithium amide salt to the cyclic carbonate is greater than 0.25 and 0.33 or less.

### 1.1 Electrolytic Solution

The electrolytic solution constituting the composite in the present disclosure comprises a cyclic carbonate as a solvent and a lithium amide salt dissolved in the cyclic carbonate.

### 1.1.1 Solvent

The electrolytic solution comprises a cyclic carbonate as a solvent. In one embodiment, the solvent may consist of a cyclic carbonate. In one embodiment, the solvent may be a mixed solvent of a cyclic carbonate and a solvent other than a cyclic carbonate.

### 1.1.1.1 Cyclic Carbonate

According to the findings of the present inventors, cyclic carbonates have a higher dielectric constant than chain carbonates and easily coordinate lithium ions. In other words, in the composite in the present disclosure, a cyclic carbonate does not easily enter into a free state, and consequently, thermal stability easily increases. Particularly, when a lithium amide salt is dissolved in the cyclic carbonate at a predetermined concentration, nearly all of the cyclic carbonate can be solvated with the lithium ions, and as a result, thermal stability can be further improved. In addition, lithium ions that are not solvated with the cyclic carbonate increase the transference number of lithium ions, and excellent lithium ion conductive properties are easily ensured.

The cyclic carbonate is not limited as long as it includes a cyclic structure as the chemical structure, it is a liquid at a temperature at which lithium ion conductive properties are desired to be exhibited, and it is capable of dissolving a lithium amide salt at a predetermined concentration. Specific examples of the cyclic carbonate include at least one selected from propylene carbonate (PC), ethylene carbonate (EC), butylene carbonate (BC), vinylene carbonate (VC), and derivatives thereof (for example, halides). Particularly, when the cyclic carbonate is at least one of propylene carbonate and ethylene carbonate, more excellent lithium ion conductive properties and thermal stability are easily ensured. One type of cyclic carbonate may be used alone, or two or more types thereof may be used in combination.

### 1.1.1.2 Solvent (Auxiliary Solvent) other than Cyclic Carbonate

The solvent (auxiliary solvent) other than a cyclic carbonate may be, for example, a chain carbonate. Examples of the chain carbonate include at least one selected from dimethyl carbonate (DMC), diethyl carbonate (DEC), and derivatives thereof (for example, halides, particularly ones having a perfluoroalkyl group). However, chain carbonates have a lower dielectric constant compared to cyclic carbonates and do not tend to coordinate lithium ions easily. Therefore, in the electrolytic solution, a chain carbonate easily enters into a free state by itself, easily volatilizes, and is likely to have high reactivity with a sulfide solid electrolyte, which will be described below. In the electrolytic solution, when there is a small amount of auxiliary solvent other than a cyclic carbonate, high thermal stability is easily ensured, and ionic conductivity is easily improved while reactivity with a sulfide solid electrolyte is suppressed. In the electrolytic solution, the molar ratio of the auxiliary solvent to the cyclic carbonate ([auxiliary solvent (mol)]/[cyclic carbonate (mol)]) may be 0 or greater and 0.10 or less, 0 or greater and 0.05 or less, or 0 or greater and 0.03 or less.

### 1.1.2 Lithium Salt

The electrolytic solution comprises a lithium salt dissolved in the solvent. In one embodiment, the lithium salt dissolved in the solvent may consist of a lithium amide salt. In one embodiment, the lithium salt dissolved in the solvent may be a combination of a lithium amide salt and a lithium salt other than a lithium amide salt.

### 1.1.2.1 Lithium Amide Salt

The electrolytic solution comprises a lithium amide salt dissolved in the cyclic carbonate. Specifically, the lithium amide salt may be dissolved in the cyclic carbonate and ionized into cations and anions, or may form association units with the cyclic carbonate. The molar ratio of the lithium amide salt to the cyclic carbonate ([lithium amide salt (mol)]/[cyclic carbonate (mol)]) is greater than 0.25 and 0.33 or less. In other words, the lithium amide salt is dissolved in the cyclic carbonate at a concentration of 0.25 mol or more and 0.33 mol or less per mol of cyclic carbonate.

Various amide salts can be adopted as the lithium amide salt. In the composite in the present disclosure, it is considered that lithium ions can be coordinated to active sites of the cyclic carbonate regardless of the type of lithium amide salt, and excellent thermal stability and lithium ion conductive properties can be ensured. Specific examples of the lithium amide salt include at least one sulfonylamide salt selected from lithium bisfluorosulfonylamide (LiFSA, LiN(SO₂F)₂), lithium bistrifluoromethanesulfonylamide (LiTFSA, Li[N(CF3SO2)2]), lithium bisperfluoroethylsulfonylamide (Li[N(C₂F₅SO₂)₂]), lithium bisperfluorobutylsulfonylamide (Li[N(C4F9SO2)2]), lithium fluorosulfonyltrifluoromethanesulfonylamide (Li[N(FSO2) (C₂F₅SO₂)]). Alternatively, silylamide salts having Si in place of S may be adopted. Particularly, when the lithium amide salt is at least one of lithium bisfluorosulfonylamide (LiFSA, LiN(SO₂F)₂) and lithium bistrifluoromethanesulfonylamide (LiTFSA, Li[N(CF3SO2)2]), more excellent lithium ion conductive properties and thermal stability are easily ensured, and furthermore reactivity with the sulfide solid electrolyte described below is more easily decreased. One type of lithium amide salt may be used alone, or two or more types thereof may be used in combination. Note that, "amide salt" in the present application is a concept which also includes "imide salt".

As described above, the molar ratio of the lithium amide salt to the cyclic carbonate is greater than 0.25 and 0.33 or less. When the concentration of lithium amide salt in the cyclic carbonate is in this range, thermal stability and lithium ion conductive properties are likely to be remarkably improved. Further, reactions between active sites of the cyclic carbonate and the sulfide solid electrolyte described below are suppressed, and deterioration of the sulfide solid electrolyte is easily inhibited. When the concentration of lithium amide salt with respect to the cyclic carbonate is too low, thermal stability and lithium ion conductive properties do not easily improve. When the concentration of lithium amide salt with respect to the cyclic carbonate is excessive, there is a risk of deterioration of the lithium ion conductive properties. The molar ratio may be 0.26 or greater, 0.27 or greater, or 0.28 or greater, and may be 0.32 or less, 0.31 or less, or 0.30 or less. The molar ratio of the lithium amide salt to the cyclic carbonate in the composite can be specified by analyzing the ions and elements constituting the composite.

### 1.1.2.2 Lithium Salt other than Lithium Amide Salt

In the electrolytic solution, the lithium salt dissolved in the solvent may consist of the above lithium amide salt, or may be a combination of the above lithium amide salt and a lithium salt (additional lithium salt) other than a lithium amide salt. In either case, as long as the lithium amide salt is dissolved at a predetermined concentration with respect to the cyclic carbonate, excellent thermal stability and ion conductive properties are easily ensured. However, according to the findings of the present inventors, some lithium salts other than lithium amide salts have reactivity with the sulfide solid electrolyte described below. For example, if the molecular weight of anions constituting a lithium salt is too low, charge density becomes too high (electron donicity is too high), and the sulfide solid electrolyte is deprived of Li, which can deteriorate the sulfide solid electrolyte. Such a problem is less likely to occur in lithium amide salts. Thus, in the electrolytic solution, it is preferred that the ratio of a lithium amide salt in the lithium salts dissolved in the solvent be higher. Specifically, the ratio of the lithium amide salt in all (100 mol%) of the lithium salts may be 50 mol% or greater, 60 mol% or greater, 70 mol% or greater, 80 mol% or greater, 90 mol% or greater, 95 mol% or greater, or 99 mol% or greater.

### 1.1.3 Optional Components in Electrolytic Solution

The electrolytic solution may comprise additional components, in addition to the cyclic carbonate and lithium amide salt described above. Examples of the additional components include the auxiliary solvent and the additional lithium salt described above. Further, the electrolytic solution may comprise various additives.

### 1.2 Polymer

According to the findings of the present inventors, a composite of the electrolytic solution and a polymer is formed, thereby not only allowing excellent lithium ion conductive properties to be ensured, but also enabling lithium ion input/output characteristics to be improved. For example, even if the composite in the present disclosure and an active material are combined to form a battery and charge/discharge of the battery is repeated, SEI inhibiting desorption/insertion of lithium ions is hardly formed on a surface of the active material, an interface between the composite and the active material is in a favorable state and lithium ion input/output characteristics are easily excellent. If the electrolytic solution is directly applied to a battery without formation of a composite of the electrolytic solution and a polymer, the above effects are hardly obtained.

### 1.2.1 Type of Polymer

The type of the polymer constituting the composite in the present disclosure is not particularly limited, and any polymer capable of forming a composite with the electrolytic solution can be adopted. In a composite according to one embodiment, the polymer may be a fluoride-based polymer or a non-fluoride-based polymer. The fluoride-based polymer has the advantage of being low in reactivity with the sulfide solid electrolyte described below. The non-fluoride-based polymer has the advantage of being easily increased in affinity with the electrolytic solution, as compared with the fluoride-based polymer.

The fluoride-based polymer may be at least one selected from a polyvinylidene fluoride (PVdF)-based polymer, a polytetrafluoroethylene (PTFE)-based polymer, and the like. The fluoride-based polymer may be a homopolymer obtained by singly polymerizing one type of monomer, or a copolymer containing a polymerization unit derived from an additional monomer such as hexafluoropropylene. The fluoride-based polymer may be derived from a fluoride-based monomer at a proportion of 50 mol% or greater and 100 mol% or less, 60 mol% or greater and 100 mol% or less, 70 mol% or greater and 100 mol% or less, 80 mol% or greater and 100 mol% or less, 90 mol% or greater and 100 mol% or less, or 95 mol% or greater and 100 mol% or less of all polymerization units.

The non-fluoride-based polymer may be an ether-based polymer or a non-ether-based polymer. The ether-based polymer may be at least one selected from polyethylene oxide, polypropylene oxide, and the like. The non-ether-based polymer may be at least one selected from butadiene rubber (BR), butylene rubber (IIR), acrylate/butadiene rubber, or styrene/butadiene rubber (SBR), polyimide (PI), polyacrylic acid, and the like. Such a non-fluoride-based polymer may be a homopolymer obtained by singly polymerizing one type of monomer, or a copolymer containing a polymerization unit derived from an additional monomer. The non-fluoride-based polymer may be derived from a non-fluoride-based monomer at a proportion of 50 mol% or greater and 100 mol% or less, 60 mol% or greater and 100 mol% or less, 70 mol% or greater and 100 mol% or less, 80 mol% or greater and 100 mol% or less, 90 mol% or greater and 100 mol% or less, or 95 mol% or greater and 100 mol% or less of all polymerization units.

### 1.2.2 Molecular Weight of Polymer

When the polymer constituting the composite in the present disclosure has a molecular weight equal to or higher than a certain value, the composite is easily in a state of having no fluidity (a viscosity at 25°C of 10,000 mPa·s or more) as a whole. From this viewpoint, the weight average molecular weight of the polymer may be, for example, 30,000 or more and 3,000,000 or less. The weight average molecular weight of the polymer may be 100,000 or more, or 500,000 or more, and may be 2,000,000 or less, or 1,000,000 or less. The weight average molecular weight of the polymer is a value based on gel permeation chromatography (GPC: Gel Permeation Chromatography).

### 1.3 Composite

The composite in the present disclosure is formed as a composite of the electrolytic solution and the polymer. A composite according to one embodiment may be a composite in which the electrolytic solution is retained by the polymer. A composite according to one embodiment may be a composite in which the viscosity of the electrolytic solution is increased by the polymer. A composite according to one embodiment may be a composite of the polymer and the electrolytic solution mutually integrated to have no fluidity (a viscosity at 25°C of 10,000 mPa·s or more) as the entire composite. A composite according to one embodiment a composite in which, when the composite is used, an electrolytic solution free from the composite outside the composite is not substantially present (an electrolytic solution which can be free outside the composite is at a proportion of 0.1% by mass or less of the entire electrolytic solution contained in the composite). A composite according to one embodiment may be solid at 25°C.

### 1.3.1 Compounding Ratio (Mass Ratio) of Electrolytic Solution and Polymer

The compounding ratio (mass ratio) of the electrolytic solution and the polymer in the composite in the present disclosure is not particularly limited. In order that the polymer and the electrolytic solution are mutually integrated and thus are in a state of having no fluidity (a viscosity at 25°C of 10,000 mPa·s or more) as the entire composite, for example, the ratio M₂/(M₁+M₂) of the mass M2 of the polymer to the total M₁+M₂ of the mass M₁ of the electrolytic solution and the mass M2 of the polymer, constituting the composite, is preferably 0.10 or greater and 0.50 or less. The ratio M₂/(M₁+M₂) may be 0.15 or greater, or 0.20 or greater, and may be 0.40 or less, or 0.30 or less. The mass ratio of the electrolytic solution and the polymer in the composite can be specified by analyzing the ions and elements constituting the composite.

### 1.3.2 Viscosity

The viscosity at 25°C of the composite in the present disclosure may be 10,000 mPa·s or more, 50,000 mPa·s or more, or 100,000 mPa·s or more. The upper limit of the viscosity is not particularly limited. The composite in the present disclosure may be solid at 25°C. The viscosity of the composite can be measured at 25°C with a rheometer (manufactured by Thermo Fisher Scientific).

### 1.3.3 Existence Form of Composite

As described above, the composite in the present disclosure may have no fluidity as a whole, namely, may have a fixed shape. The composite in the present disclosure may be, for example, in the form of a sheet or powder. Alternatively, the composite in the present disclosure may be one integrated with any material other than the composite. A composite according to one embodiment may be integrated with, for example, a solid electrolyte. More specifically, for example, at least one portion of a solid electrolyte particle surface may be covered with the composite in the present disclosure. A composite according to one embodiment may be integrated with an active material. More specifically, at least one portion of an active material particle surface may be covered with the composite in the present disclosure. The solid electrolyte and the active material are described below.

### 1.4 Additional Components

The lithium ion conducting material of the present disclosure comprises at least the composite. A lithium ion conducting material according to one embodiment may consist of the composite. A lithium ion conducting material according to one embodiment may be a combination of the composite and a material other than the composite.

### 1.4.1 Sulfide Solid Electrolyte

The lithium ion conducting material of the present disclosure may comprise the composite and a sulfide solid electrolyte. According to a combination of the composite and a sulfide solid electrolyte, for example, gaps between sulfide solid electrolytes can be filled by the composite. That is, ion-conducting paths can be formed in the gap spaces within the sulfide solid electrolyte. According to a combination of the composite and a sulfide solid electrolyte, for example, the composite can serve as a binder binding such sulfide solid electrolytes or the sulfide solid electrolyte and any other material.

When the composite is combined with the sulfide solid electrolyte, it is preferable that reactions of the composite with the sulfide solid electrolyte be suppressed, as described above. Specifically, when the lithium ion conducting material of the present disclosure comprises the composite and the sulfide solid electrolyte, at least one of the following (1) to (3) may be satisfied, two or more of (1) to (3) may be satisfied, or all of (1) to (3) may be satisfied.
(1) The electrolytic solution comprises only a cyclic carbonate as a solvent, or a cyclic carbonate and a solvent (auxiliary solvent) other than a cyclic carbonate, and the molar ratio of the auxiliary solvent to the cyclic carbonate ([auxiliary solvent (mol)]/[cyclic carbonate (mol)]) is 0.10 or less, 0.05 or less, or 0.03 or less.
(2) The proportion of a lithium amide salt in the entire lithium salt (100 mol%) dissolved in the solvent in the electrolytic solution is 50 mol% or greater, 60 mol% or greater, 70 mol% or greater, 80 mol% or greater, 90 mol% or greater, 95 mol% or greater or 99 mol% or greater, and the lithium amide salt is at least one of lithium bisfluorosulfonylamide (LiFSA) and lithium bistrifluoromethanesulfonylamide (LiTFSA).
(3) The polymer is a fluoride-based polymer.

The sulfide solid electrolyte may be a glass-based sulfide solid electrolyte (sulfide glass), a glass ceramics-based sulfide solid electrolyte, or a crystalline sulfide solid electrolyte. The sulfide glass is amorphous. The sulfide glass may have a glass transition temperature (Tg). When the sulfide solid electrolyte comprises a crystal phase, examples of the crystal phase include a Thio-LISICON-type crystal phase, an LGPS-type crystal phase, and an argyrodite-type crystal phase.

The sulfide solid electrolyte may contain, for example, a Li element, an X element (X is at least one of P, As, Sb, Si, Ge, Sn, B, Al, Ga, and In), and a S element. The sulfide solid electrolyte may further contain at least one of an O element and a halogen element. The sulfide solid electrolyte may contain a S element as a main component of an anion element.

The sulfide solid electrolyte may be, for example, at least one selected from Li₂S-P₂S₅, Li₂S-P₂S₅-LiI, Li2S-P2S5-GeS2, Li₂S-P₂S₅-Li₂O, Li₂S-P₂S₅-Li₂O-LiI, Li₂S-P₂S₅-LiI-LiBr, Li2S-SiS2, Li₂S-SiS₂-LiI, Li2S-SiS2-LiBr, Li2S-SiS2-LiCl, Li₂S-SiS₂-B₂S₃-LiI, Li2S-SiS2-P₂S₅-LiI, Li2S-B2S3, Li2S-P2S5-ZmSn (wherein m and n are positive values, and Z is any of Ge, Zn, and Ga.), Li2S-GeS2, Li₂S-SiS₂-Li₃PO₄, Li₂S-SiS₂-LiₓMO_{y} (wherein x and y are positive values, and M is any of P, Si, Ge, B, Al, Ga, and In.).

A composition of the sulfide solid electrolyte is not particularly limited, and examples include xLi₂S·(100-x)P₂S₅ (70 ≤ x ≤ 80) and yLiI·zLiBr·(100-y-z)(xLi₂S·(1-x)P₂S₅) (0.7 ≤ x ≤ 0.8, 0 ≤ y ≤ 30, 0 ≤ z ≤ 30). Alternatively, the sulfide solid electrolyte may have a composition represented by general formula: Li₄₋ₓGe₁₋ₓPₓS₄(0 < x < 1). In the general formula, Ge is optionally at least partially substituted with at least one of Sb, Si, Sn, B, Al, Ga, In, Ti, Zr, V and Nb. In the general formula, P is optionally at least partially substituted with at least one of Sb, Si, Sn, B, Al, Ga, In, Ti, Zr, V, and Nb. In the general formula, Li is optionally partially substituted with at least one of Na, K, Mg, Ca, and Zn. In the general formula, S is optionally partially substituted with halogen (at least one of F, Cl, Br, and I). Alternatively, the sulfide solid electrolyte may have a composition represented by Li₇₋ₐPS₆₋ₐXₐ (X is at least one of Cl, Br and I, and a is a numerical value of 0 or greater and 2 or less). a may be 0, or greater than 0. In the latter case, a may be 0.1 or greater, 0.5 or greater, or 1 or greater. a may be 1.8 or less, or 1.5 or less.

The sulfide solid electrolyte may be particulate. The average particle diameter (D50) of the sulfide solid electrolyte may be, for example, 10 nm or more and 100 µm or less. The average particle diameter D50 mentioned in the present application is a particle diameter (median diameter) at a cumulative value of 50% in a particle size distribution on a volume basis determined by a laser diffraction/scattering method.

### 1.4.2 Various Additives

The lithium ion conducting material of the present disclosure may comprise various additives, in addition to the above component. The type of additive can be selected according to the application of the lithium ion conducting material.

### 2. Lithium Ion Secondary Battery

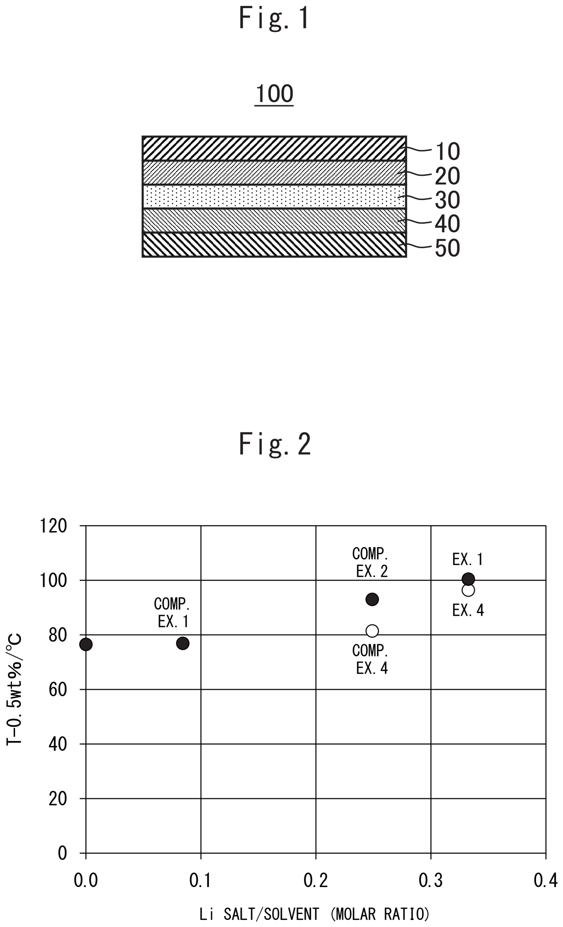

The lithium ion conducting material of the present disclosure is used, for example, as an electrolytic material for lithium ion secondary batteries. Hereinafter, a lithium ion secondary battery comprising the lithium ion conducting material of the present disclosure will be described. As shown in FIG. 1, the lithium ion secondary battery 100 according to one embodiment comprises a positive electrode active material layer 20, an electrolyte layer 30, and a negative electrode active material layer 40. At least one of the positive electrode active material layer 20, the electrolyte layer 30 and the negative electrode active material layer 40 comprises the lithium ion conducting material of the present disclosure. As shown in FIG. 1, the secondary battery 100 may comprise a positive electrode current collector 10 in contact with the above positive electrode active material layer 20. As shown in FIG. 1, the secondary battery 100 may comprise a negative electrode current collector 50 in contact with the negative electrode active material layer 40.

As described above, the lithium ion conducting material of the present disclosure has not only excellent thermal stability and lithium ion conductive properties, but also excellent lithium ion input/output characteristics. In this regard, by including the lithium ion conducting material of the present disclosure in at least one of the positive electrode active material layer 20, the electrolyte layer 30 and the negative electrode active material layer 40 of the secondary battery 100, the performance of the secondary battery 100 is easily enhanced. For example, even when charge/discharge of the secondary battery 100 is repeated, the resistance of the interface between an active material and the lithium ion conducting material is easily kept low. Particularly, when at least the negative electrode active material layer 40 comprises the lithium ion conducting material of the present disclosure, the performance of the secondary battery 100 is further easily enhanced. Also when the negative electrode active material layer 40 comprises Si as a negative electrode active material, the performance of the secondary battery 10 is further easily enhanced.

### 2.1 Positive Electrode Current Collector

The secondary battery 100 may comprise a positive electrode current collector 10 in contact with the positive electrode active material layer 20. Any material generally used as a positive electrode current collector for secondary batteries can be adopted as the positive electrode current collector 10. In addition, the positive electrode current collector 10 may have at least one shape selected from a foil, a plate, a mesh, a perforated (punched) metal, and a foam body. The positive electrode current collector 10 may be comprised of a metal foil or a metal mesh. Particularly, a metal foil has excellent handleability. The positive electrode current collector 10 may be formed of a plurality of foils. Examples of the metal constituting the positive electrode current collector 10 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring oxidation resistance, the positive electrode current collector 10 may comprise Al. For the purpose of adjusting resistance and etc., the surface of the positive electrode current collector 10 may have some coating layer. For example, the positive electrode current collector 10 may have a carbon coating layer. Further, the above metals may be plated or vapor-deposited onto a metal foil or a substrate for the positive electrode current collector 10. When the positive electrode current collector 10 comprises a plurality of metal foils, some layer may be included between the plurality of metal foils. The thickness of the positive electrode current collector 10 is not particularly limited. The thickness may be, for example, 0.1 µm or more, or 1 µm or more, and may be 1 mm or less, or 100 µm or less.

### 2.2 Positive Electrode Active Material Layer

The secondary battery 100 comprises a positive electrode active material layer 20. The positive electrode active material layer 20 comprises at least a positive electrode active material. Further, the positive electrode active material layer 20 may optionally comprise an electrolyte, a conductive aid, a binder, and various additives. When the positive electrode active material layer 20 comprises the lithium ion conducting material of the present disclosure, the positive electrode active material layer 20 may optionally further comprise an additional electrolyte, a conductive aid, a binder and various additives in addition to the positive electrode active material and the lithium ion conducting material. The content of each of the components in the positive electrode active material layer 20 may be appropriately determined according to the target performance of a battery. For example, the content of the positive electrode active material to 100% by mass of the total solid content of the positive electrode active material layer 20 may be 40% by mass or greater, 50% by mass or greater, 60% by mass or greater, or 70% by mass or greater, and may be 100% by mass or less, less than 100% by mass, 95% by mass or less, or 90% by mass or less. Alternatively, the positive electrode active material and optionally the electrolyte, the conductive aid and the binder may be contained at a total proportion of 85% by volume or greater, 90% by volume or greater, or 95% by volume or greater to the entire positive electrode active material layer 20 as 100% by volume, and the balance may be a void space or an additional component. The shape of the positive electrode active material layer 20 is not particularly limited, and may be, for example, a sheet having a substantially flat surface. The thickness of the positive electrode active material layer 20 is not particularly limited, and may be, for example, 0.1 µm or more, 1 µm or more, 10 µm or more, or 30 µm or more, and may be 2 mm or less, 1 mm or less, 500 µm or less, or 100 µm or less.

### 2.2.1 Positive Electrode Active Material

Any known positive electrode active material for secondary batteries can be adopted as the positive electrode active material. Of known active materials, a material exhibiting a potential (charge/discharge potential) at which lithium ions are stored and released that is relatively electropositive can be used as the positive electrode active material, and a material exhibiting such a potential that is relatively electronegative can be used as the negative electrode active material described below. The positive electrode active material may be, for example, at least one selected from various lithium-containing compounds, elemental sulfur, and sulfur compounds. The lithium-containing compound as the positive electrode active material may be a lithium-containing oxide containing at least one element M, Li, and O. The element M may be, for example, at least one selected from Mn, Ni, Co, Al, Mg, Ca, Sc, V, Cr, Cu, Zn, Ga, Ge, Y, Zr, Sn, Sb, W, Pb, Bi, Fe and Ti, or at least one selected from Mn, Ni, Co, Al, Fe and Ti. More specifically, the lithium-containing oxide may be at least one selected from lithium cobalt oxide, lithium nickel oxide, lithium manganese oxide, lithium nickel-cobalt oxide, lithium nickelmanganese oxide, lithium cobalt-manganese oxide, lithium nickel-cobalt-manganese oxide (Li_{1±α}NiₓCo_{y}Mn_{z}O_{2±δ} (for example, 0 < x < 1, 0 < y < 1, 0 < z < 1, x + y + z = 1)), lithium spinel compounds (different-element-substituted Li-Mn spinel of a composition represented by Li₁₊ₓMn_{2-x-y}M_{y}O₄ (M is at least one or more selected from Al, Mg, Co, Fe, Ni and Zn)), lithium nickel-cobalt-aluminum oxide (for example, Li_{1±α}NiₚCo_{q}AlᵣO_{2±δ} (for example, p + q + r = 1)), lithium titanate, and lithium metal phosphate (for example, LiMPO₄, M is at least one or more selected from Fe, Mn, Co and Ni). Particularly, when the positive electrode active material comprises a lithium-containing oxide at least containing at least one of Ni, Co and Mn, Li, and O, as constituent elements, the performance of the secondary battery is further easily enhanced. Alternatively, also when the positive electrode active material comprises a lithium-containing oxide at least containing at least one of Ni, Co and Al, Li, and O, as constituent elements, the performance of the secondary battery is further easily enhanced. One type of positive electrode active material may be used alone, or two or more types thereof may be used in combination.

The shape of the positive electrode active material may be any general shape for a positive electrode active material in secondary batteries. The positive electrode active material may be, for example, particulate. The positive electrode active material may have a void space, and may be, for example, porous or hollow. The positive electrode active material may be a primary particle or a secondary particle of a plurality of agglomerated primary particles. The average particle diameter D50 of the positive electrode active material may be, for example, 1 nm or more, 5 nm or more, or 10 nm or more, and 500 µm or less, 100 µm or less, 50 µm or less, or 30 µm or less. The average particle diameter D50 of the positive electrode active material is a particle diameter (median diameter) at a cumulative value of 50% in a particle size distribution on a volume basis determined by a laser diffraction/scattering method.

### 2.2.2 Protective Layer

An ion conductive protective layer may be formed on the surface of the positive electrode active material. Specifically, the positive electrode active material layer 20 may comprise a composite of the positive electrode active material and the protective layer, and at least one portion of the surface of the positive electrode active material may be covered with the protective layer in the composite. Thus, for example, a reaction between the positive electrode active material and another battery material (for example, the sulfide solid electrolyte described below) can be easily suppressed. The ion conductive protective layer can comprise various ion conductive compounds. Such an ion conductive compound may be at least one selected from an ion conductive oxide, an ion conductive halide, and the like.

The ion conductive oxide may contain, for example, at least one element selected from B, C, Al, Si, P, S, Ti, La, Zr, Nb, Mo, Zn and W, Li, and O. The ion conductive oxide may be an oxynitride containing N. More specifically, the ion conductive oxide may be at least one selected from Li3BO3, LiBO2, Li2CO3, LiAlO2, Li4SiO4, Li2SiO3, Li3PO4, Li2SO4, Li2TiO3, Li₄Ti₅O₁₂, Li₂Ti₂O₅, Li₂ZrO₃, LiNbO₃, Li₂MoO₄, Li₂WO₄, LiPON, Li₂O-LaO₂, Li₂O-ZnO₂, and the like. The ion conductive oxide may be one in which some elements are substituted with various doping elements.

The ion conductive halide may be, for example, at least one of various compounds exemplified as the halide solid electrolyte described below. The ion conductive halide may contain, for example, at least one element selected from the group consisting of Mg, Ca, Sr, Ba, Zn, Sn, Al, Sc, Ga, Bi, Sb, Zr, Hf, Ti, Ta, Nb, W, Y, Gd, Tb and Sm, at least one halogen element selected from the group consisting of Cl, Br, I and F, and Li. The ion conductive halide may contain at least one selected from the group consisting of Ti, Al, Gd, Ca, Zr and Y, at least one selected from the group consisting of Cl, Br, I and F, and Li. The ion conductive halide may contain at least one element selected from the group consisting of Ti and Al, Cl, Br, at least one element selected from the group consisting of I and F, and Li. The ion conductive halide may be, for example, a composite halide of Li, Ti, Al, and F.

The coverage (area ratio) of the protective layer to the surface of the positive electrode active material may be, for example, 70% or greater, 80% or greater, or 90% or greater. The thickness of the protective layer may be, for example, 0.1 nm or more, or 1 nm or more, and may be 100 nm or less, or 20 nm or less.

### 2.2.3 Electrolyte

The positive electrode active material layer 20 can contain an electrolyte. The electrolyte that can be contained in the positive electrode active material layer 20 may be the lithium ion conducting material of the present disclosure, a solid electrolyte, a liquid electrolyte, or a combination thereof.

### 2.2.3.1 Solid Electrolyte

Any known solid electrolyte for secondary batteries may be used as the solid electrolyte. The solid electrolyte other than the lithium ion conducting material of the present disclosure may be an inorganic solid electrolyte or an organic polymer electrolyte. Particularly, an inorganic solid electrolyte is excellent in ion conductive properties and heat resistance. Examples of the inorganic solid electrolyte include an oxide solid electrolyte, a sulfide solid electrolyte, and an ion-binding inorganic solid electrolyte. Among these inorganic solid electrolytes, the performance of a sulfide solid electrolyte, furthermore, in particular, a sulfide solid electrolyte containing at least Li, S and P as constituent elements is high. Alternatively, among these inorganic solid electrolytes, the performance of an ion-binding solid electrolyte, furthermore, in particular, a solid electrolyte containing at least Li, Y and halogen (at least one of Cl, Br, I, and F) as constituent elements is high. The solid electrolyte may be amorphous or crystalline. The solid electrolyte may be particulate. The average particle diameter (D50) of the solid electrolyte may be, for example, 10 nm or more and 10 µm or less. The ionic conductivity at 25°C of the solid electrolyte may be, for example, 1 × 10⁻⁵ S/cm or more, 1 × 10⁻⁴ S/cm or more, or 1 × 10⁻³ S/cm or more. One type of solid electrolyte may be used alone, or two or more types thereof may be used in combination.

The oxide solid electrolyte may be one or more selected from lithium lanthanum zirconate, LiPON, Li_{1+X}Al_{X}Ge_{2-X}(PO₄)₃, Li-SiO-based glass, and Li-Al-S-O-based glass. When the oxide solid electrolyte and the liquid electrolyte are combined, ion conductive properties can be improved.

The sulfide solid electrolyte is as described above.

The ion-binding solid electrolyte may contain, for example, at least one element selected from the group consisting of Mg, Ca, Sr, Ba, Zn, Sn, Al, Sc, Ga, Bi, Sb, Zr, Hf, Ti, Ta, Nb, W, Y, Gd, Tb and Sm. These elements can generate cations in water. The ion-binding solid electrolytic material may further contain, for example, at least one halogen element selected from the group consisting of Cl, Br, I, and F. These elements can generate anions in water. The ion-binding solid electrolyte may contain at least one selected from the group consisting of Gd, Ca, Zr and Y, at least one selected from the group consisting of Cl, Br, I and F, and Li. The ion-binding solid electrolyte contains Li and Y, and may contain at least one selected from the group consisting of Cl, Br, I, and F. More specifically, the ion-binding solid electrolyte may contain Li, Y, Cl, and Br, may contain Li, Ca, Y, Gd, Cl, and Br, or may contain Li, Zr, Y, and Cl. More specifically, the ion-binding solid electrolyte may be at least one of Li3YBr2Cl4, Li_{2.8}Ca_{0.1}Y_{0.5}Gd_{0.5}Br₂Cl₄, and Li_{2.5}Y_{0.5}Zr_{0.5}Cl₆.

The ion-binding solid electrolyte may be a halide solid electrolyte. The halide solid electrolyte is excellent in ion conductive properties. The halide solid electrolyte may have, for example, a composition represented by formula (A):

Li_{α}M_{β}X_{γ} ···(A)

wherein α, β and γ are each independently a value more than 0, M is at least one selected from the group consisting of a metal element other than Li and a semi-metal element, and X is at least one selected from the group consisting of Cl, Br and I. Herein, the "semi-metal element" may be at least one selected from the group consisting of B, Si, Ge, As, Sb, and Te. Further, the "metal element" may encompass all elements included in (i) Group 1 to Group 12 in the periodic table (provided that hydrogen is excluded) and all elements included in (ii) Group 13 to Group 16 in the periodic table (provided that B, Si, Ge, As, Sb, Te, C, N, P, O, S and Se are excluded.). The metal element can be taken with a halide ion to form an inorganic compound and serve as a cation.

In the formula (A), M may contain Y (namely, yttrium). The halide solid electrolyte containing Y may have a composition represented by LiₐMe_{b}Y_{c}X₆ (wherein a+mb+3c = 6, c > 0, Me is at least one selected from the group consisting of a metal element other than Li and Y, and a semi-metal element, and m is the valence of Me). Me may be, for example, at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): Li6-3dYdX6. In the formula (A1), X is at least one or more elements selected from the group consisting of Cl, Br, and I. d may satisfy 0 < d < 2, and d = 1 may be satisfied. The halide solid electrolyte may have a composition represented by formula (A2): Li_{3-3δ}Y_{1+δ}Cl₆. In the formula (A2), 0 < δ ≤ 0.15 may be satisfied. The halide solid electrolyte may have a composition represented by formula (A3): Li_{3-3δ}Y_{1+δ}Br₆. In the formula (A3), 0 < δ ≤ 0.25 may be satisfied. The halide solid electrolyte may have a composition represented by formula (A4): Li_{3-3δ+a}Y_{1+δ-a}MeₐCl_{6-x-y}BrₓI_{y}. In the formula (A4), Me may be at least one selected from the group consisting of Mg, Ca, Sr, Ba, and Zn. In the formula (A4), for example, -1 < δ<2, 0 < a < 3, 0 < (3-3δ+a), 0 < (1+δ-a), 0 ≤ x ≤ 6, 0 ≤ y ≤ 6 and (x+y) ≤ 6 are satisfied. The halide solid electrolyte may have a composition represented by formula (A5): Li_{3-3δ}Y_{1+δ-a}MeₐCl_{6-x-y}BrₓI_{y}. In the formula (A5), Me may be at least one selected from the group consisting of Al, Sc, Ga and Bi. In the formula (A5), -1 < δ < 1, 0 < a < 2, 0 < (1 +δ-a), 0 ≤ x ≤ 6, 0 ≤ y ≤ 6, and (x+y) ≤ 6 may be satisfied. The halide solid electrolyte may have a composition represented by formula (A6): Li_{3-3δ-a}Y_{1+δ-a}MeₐCl_{6-x-y}BrₓI_{y}. In the formula (A6), Me may be at least one selected from the group consisting of Zr, Hf and Ti. In the formula (A6), -1 < δ < 1, 0 < a < 1.5, 0 < (3-3δ-a), 0 < (1+δ-a), 0 ≤ x ≤ 6, 0 ≤ y ≤ 6, and (x+y) ≤ 6 may be satisfied. The halide solid electrolyte may have a composition represented by formula (A7): Li_{3-3δ-2a}Y_{1+δ-a}MeₐCl_{6-x-y}BrₓI_{y}. In the formula (A7), Me may be at least one selected from the group consisting of Ta and Nb. In the formula (A7), -1 < δ < 1, 0 < a < 1.2, 0 < (3-3δ-2a), 0 < (1+δ-a), 0 ≤ x ≤ 6, 0 ≤ y ≤ 6, and (x+y) ≤ 6 may be satisfied.

The ion-binding solid electrolyte may be a complex hydride solid electrolyte. The complex hydride solid electrolyte can be constituted from a Li ion and a complex ion containing H. The complex ion containing H may have, for example, an element M containing at least one of a non-metal element, a semi-metal element and a metal element, and H bound with the element M. The complex ion containing H may be an ion in which an element M serving as the center element and H surrounding the element M are bound to each other via a covalent bond. The complex ion containing H may be represented by (MₘHₙ)^{α-}. In this case, m is any positive value, n and α can take any positive value depending on m, the valence of the element M, and/or the like. The element M may contain a non-metal element or a metal element capable of forming a complex ion. For example, the element M may contain, as a non-metal element, at least one of B, C and N, or B. For example, the element M may contain, as a metal element, at least one of Al, Ni and Fe. Particularly, when the complex ion contains B, or contains C and B, higher ion conductive properties are easily ensured. Specific examples of the complex ion containing H include (CB₉H₁₀)⁻, (CB₁₁H₁₂)⁻, (B₁₀H₁₀)²⁻, (B₁₂H₁₂)²⁻, (BH₄)⁻, (NH₂)⁻, (AlH₄)⁻, and any combination thereof. Particularly, when (CB₉H₁₀)⁻, (CB₁₁H₁₂)⁻, or any combination thereof is used, higher ion conductive properties are easily ensured. Specifically, the complex hydride solid electrolyte may contain Li, C, B, and H.

### 2.2.3.2 Liquid Electrolyte

The liquid electrolyte (electrolytic solution) is a liquid containing a lithium ion as a carrier ion. The electrolytic solution may be an aqueous electrolytic solution or a nonaqueous electrolytic solution. The composition of the electrolytic solution may be the same as any known composition of electrolytic solutions for lithium ion secondary batteries. The electrolytic solution may be an electrolytic solution in which a lithium salt is dissolved in an aqueous or nonaqueous solvent. Examples of the nonaqueous solvent include various carbonate-based solvents described above. Examples of the lithium salt include lithium amide salts described above and LiPF6. The electrolytic solution may be the same as or different from the electrolytic solution constituting the composite in the present disclosure.

### 2.2.4 Conductive Aid

Examples of the conductive aid that can be contained in the positive electrode active material layer 20 include carbon materials such as vapor-grown carbon fibers (VGCF), acetylene black (AB), Ketjen black (KB), carbon nanotubes (CNT), and carbon nanofibers (CNF); and metal materials such as nickel, titanium, aluminum, and stainless steel. The conductive aid may be, for example, particulate or fibrous, and the size thereof is not particularly limited. One type of conductive aid may be used alone, or two or more types thereof may be used in combination.

### 2.2.5 Binder

Examples of the binder that can be contained in the positive electrode active material layer 20 include butadiene rubber (BR)-based binders, butylene rubber (IIR)-based binders, acrylate/butadiene rubber (ABR)-based binders, styrene/butadiene rubber (SBR)-based binders, polyvinylidene fluoride (PVdF)-based binders, polytetrafluoroethylene (PTFE)-based binders, and polyimide (PI)-based binders. One type of binder may be used alone, or two or more types thereof may be used in combination.

### 2.2.6 Additional Additives

The positive electrode active material layer 20 may comprise various additives in addition to the components. For example, a dispersant and/or a lubricant may be contained.

The positive electrode active material layer 20 can be manufactured by applying a known method. For example, the positive electrode active material layer 20 can be easily formed by dry- or wet-molding a positive electrode mixture containing the various components above. The positive electrode active material layer 20 may be molded together with the positive electrode current collector 10 or separately from the positive electrode current collector 10.

### 2.3 Electrolyte Layer

The secondary battery 100 includes an electrolyte layer 30. The electrolyte layer 30 is placed between the positive electrode active material layer 20 and the negative electrode active material layer 40. The electrolyte layer 30 comprises at least an electrolyte. The electrolyte layer 30 may comprise at least one of a solid electrolyte and an electrolytic solution, or may optionally further comprise a binder or the like. When the electrolyte layer 30 comprises the above lithium ion conducting material of the present disclosure, the electrolyte layer 30 may further comprise an additional electrolyte, a binder, and various additives in addition to the lithium ion conducting material. The content of each of the electrolyte and the binder in the electrolyte layer 30 is not particularly limited. Alternatively, the electrolyte layer 30 may include a separator for retaining the electrolytic solution and preventing contact between the positive electrode active material layer 20 and the negative electrode active material layer 40. The thickness of the electrolyte layer 30 is not particularly limited, and may be, for example, 0.1 µm or more, or 1 µm or more, and may be 2 mm or less, or 1 mm or less.

The electrolyte layer 30 may consist of one layer or a plurality of layers. For example, the electrolyte layer 30 may include a first layer placed on the positive electrode active material layer 20 and a second layer placed on the negative electrode active material layer 40, and the first layer may contain a first electrolyte and the second layer may contain a second electrolyte. The first electrolyte and the second electrolyte may be different in type from each other. The first electrolyte and the second electrolyte may be each at least one selected from the oxide solid electrolyte, the sulfide solid electrolyte, and the ion-binding solid electrolyte. For example, the first layer may contain the ion-binding solid electrolyte, and the second layer may contain at least one of the ion-binding solid electrolyte and the sulfide solid electrolyte.

The electrolyte contained in the electrolyte layer 30 may be appropriately selected from the electrolytes (solid electrolytes and/or liquid electrolytes) exemplified as electrolytes that can be contained in the lithium ion conducting material of the present disclosure and the above positive electrode active material layer. The binder that can be contained in the electrolyte layer 30 may also be appropriately selected from the binders exemplified as a binder that can be contained in the positive electrode active material layer described above. For each of the electrolyte and the binder, one type may be used alone, or two or more types may be used in combination. The separator may be a separator commonly used in lithium ion secondary batteries. Examples thereof include separators made of resins such as polyethylene (PE), polypropylene (PP), polyester, and polyamide. The separator may be of a single-layer structure or a multilayer structure. Examples of a separator having a multilayer structure include separators having a twolayer structure such as PE/PP and separators having a three-layer structure such as PP/PE/PP and PE/PP/PE. The separator may be formed of a nonwoven fabric such as a cellulose nonwoven fabric, a resin nonwoven fabric, or a glass fiber nonwoven fabric.

### 2.4 Negative Electrode Active Material Layer

The secondary battery 100 comprises a negative electrode active material layer 40. The negative electrode active material layer 40 comprises at least a negative electrode active material. Further, the negative electrode active material layer 40 may optionally comprise an electrolyte, a conductive aid, a binder, and various additives. When the negative electrode active material layer 40 comprises the lithium ion conducting material of the present disclosure, the negative electrode active material layer 40 may optionally further comprise an additional electrolyte, a conductive aid, a binder and various additives in addition to the negative electrode active material and the lithium ion conducting material. The content of each of the components in the negative electrode active material layer 40 may be appropriately determined according to the target performance of a battery. For example, the content of the negative electrode active material to 100% by mass of the total solid content of the negative electrode active material layer 40 may be 40% by mass or greater, 50% by mass or greater, 60% by mass or greater, or 70% by mass or greater, and may be 100% by mass or less, less than 100% by mass, 95% by mass or less, or 90% by mass or less. Alternatively, the negative electrode active material and optionally the electrolyte, the conductive aid and the binder may be contained at a total proportion of 85% by volume or greater, 90% by volume or greater, or 95% by volume or greater to the entire negative electrode active material layer 40 as 100% by volume, and the balance may be a void space or an additional component. The shape of the negative electrode active material layer 40 is not particularly limited, and may be, for example, a sheet having a substantially flat surface. The thickness of the negative electrode active material layer 31 is not particularly limited, and may be, for example, 0.1 µm or more, 1 µm or more, 10 µm or more, or 30 µm or more, and may be 2 mm or less, 1 mm or less, 500 µm or less, or 100 µm or less.

### 2.4.1 Negative Electrode Active Material

Any known negative electrode active material for secondary batteries can be adopted as the negative electrode active material. Of known active materials, various materials exhibiting a potential (charge/discharge potential) at which lithium ions are stored and released that is electronegative as compared with that of the positive electrode active material can be adopted. For example, silicon-based active materials such as Si, Si alloys, and silicon oxides; carbonbased active materials such as graphite and hard carbon; various oxide-based active materials such as lithium titanate; and metallic lithium and lithium alloys can be adopted. In particular, when the negative electrode active material layer 40 comprises Si as a negative electrode active material, the performance of the secondary battery 100 is easily enhanced. One type of negative electrode active material may be used alone, or two or more types thereof may be used in combination. The shape of the negative electrode active material may be any general shape for a negative electrode active material in secondary batteries. For example, the negative electrode active material may be particulate. The negative electrode active material particle may be a primary particle or a secondary particle of a plurality of agglomerated primary particles. The average particle diameter (D50) of the negative electrode active material particle may be, for example, 1 nm or more, 5 nm or more, or 10 nm or more, and may be 500 µm or less, 100 µm or less, 50 µm or less, or 30 µm or less. Alternatively, the negative electrode active material may be in the form of a sheet (foil or film), such as a lithium foil. Specifically, the negative electrode active material layer 31 may consist of a negative electrode active material sheet.

### 2.4.2 Additional Items

Examples of the electrolyte that can be contained in the negative electrode active material layer 40 include the lithium ion conducting material of the present disclosure, the solid electrolyte and electrolytic solution described above, or any combination thereof. The conductive aid that can be contained in the negative electrode active material layer 40 may be appropriately selected from, for example, conductive aids exemplified as a conductive aid that can be contained in the positive electrode active material layer described above. The binder that can be contained in the negative electrode active material layer 40 may be appropriately selected from, for example, binders exemplified as a binder that can be contained in the positive electrode active material layer described above. For each of the electrolyte, the conductive aid, and the binder, one type may be used alone, or two or more types may be used in combination.

The negative electrode active material layer 40 can be manufactured by applying a known method. For example, the negative electrode active material layer 40 can be easily formed by dry- or wet-molding a negative electrode mixture containing the various components above. The negative electrode active material layer 40 may be molded together with the negative electrode current collector 50 or separately from the negative electrode current collector 50.

### 2.5 Negative Electrode Current Collector

The secondary battery 100 may comprise a negative electrode current collector 50 in contact with the negative electrode active material layer 40. Any material generally used as a negative electrode current collector for secondary batteries can be adopted as the negative electrode current collector 50. In addition, the negative electrode current collector 50 may be in the form of a foil, a plate, a mesh, a perforated (punched) metal, or a foam body. The negative electrode current collector 50 may be a metal foil or a metal mesh, and may alternatively be a carbon sheet. Particularly, a metal foil has excellent handleability. The negative electrode current collector 50 may be formed of a plurality of foils or sheets. Examples of the metal constituting the negative electrode current collector 50 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring reduction resistance and making alloying with lithium difficult, the negative electrode current collector 50 may comprise at least one metal selected from Cu, Ni, and stainless steel. For the purpose of adjusting resistance and etc., the surface of the negative electrode current collector 50 may have some coating layer. For example, the negative electrode current collector 50 may have a carbon coating layer. The negative electrode current collector 50 may be an aluminum foil having a carbon coating layer. Further, the above metals may be plated or vapor-deposited onto a metal foil or a substrate for the negative electrode current collector 50. When the negative electrode current collector 50 comprises a plurality of metal foils, some layer may be included between the plurality of metal foils. The thickness of the negative electrode current collector 50 is not particularly limited. The thickness may be, for example, 0.1 µm or more, or 1 µm or more, and may be 1 mm or less, or 100 µm or less.

### 2.6 Additional Configurations

In addition to the above configuration, the secondary battery 100 may be provided with any configuration generally used for secondary batteries, for example, a tab or a terminal. The secondary battery 100 may be a battery in which each of the above configurations is housed inside an outer packaging. Any known outer packaging for batteries can be adopted as the outer packaging. In addition, a plurality of secondary batteries 100 may be optionally electrically connected and optionally stacked to form a battery pack. In this case, the battery pack may be housed inside a known battery case. The secondary battery 100 may additionally comprise obvious components such as the necessary terminals. Examples of a shape of the secondary battery 100 may include a coin, a laminate, a cylinder, and a rectangle.

### 3. Method for Manufacturing Lithium Ion Conducting Material

The lithium ion conducting material of the present disclosure can be manufactured by, for example, the following method. Specifically, the method for manufacturing a lithium ion conducting material of the present disclosure comprises forming a composite of an electrolytic solution and a polymer. The electrolytic solution comprises a cyclic carbonate as a solvent and a lithium amide salt dissolved in the cyclic carbonate, and the molar ratio of the lithium amide salt to the cyclic carbonate is greater than 0.25 and 0.33 or less. The details of the electrolytic solution and the polymer are as described above.

According to the findings of the present inventors, mere mixing of electrolytic solutions and polymers does not impart sufficient affinity between such electrolytic solutions and polymers, causes such electrolytic solutions and polymers to be immiscible with each other and separates such electrolytic solutions and polymers. Therefore, some devisal is needed for formation of composites of electrolytic solutions and polymers. One idea for solving this can be, for example, an increase in affinity between electrolytic solutions and polymers by use of diluents during mixing of such electrolytic solutions and polymers. Specifically, the method for manufacturing a lithium ion conducting material of the present disclosure may comprise mixing a diluent with the above electrolytic solution and the above polymer to obtain a solution, and removing the diluent from the solution to form a composite of the above electrolytic solution and the above polymer. A diluent capable of dissolving both the electrolytic solution and the polymer may be used as the diluent. The diluent can also be said to be a compatibilizing agent for enhancing compatibility between the electrolytic solution and the polymer. It is considered that, when the boiling point of the diluent is lower than the boiling point of the solvent (cyclic carbonate) constituting the electrolytic solution, the diluent can be more easily removed by heating. The diluent may be, for example, a chain carbonate. Specifically, the diluent may be dimethyl carbonate. The compounding ratio among the electrolytic solution, the polymer, and the diluent is not particularly limited. When the electrolytic solution, the polymer, and the diluent are mixed, heating may be performed, or no heating may be performed.

### 4. Composite Solid Electrolyte and Composite Active Material

As described above, the lithium ion conducting material of the present disclosure may be integrated with a solid electrolyte or may be integrated with an active material. For example, it is considered that a composite solid electrolyte or a composite active material can be manufactured by preparing a solution of the above electrolytic solution, polymer, and diluent, and coating a surface of the solid electrolyte or active material with the solution and then removing the diluent, to allow at least one portion of the surface of the solid electrolyte or active material to be covered with the lithium ion conducting material of the present disclosure. More specifically, the composite solid electrolyte of the present disclosure comprises a lithium ion conducting material and a solid electrolyte, in which the lithium ion conducting material comprises a composite of an electrolytic solution and a polymer, the electrolytic solution comprises a cyclic carbonate as a solvent and a lithium amide salt dissolved in the cyclic carbonate, the molar ratio of the lithium amide salt to the cyclic carbonate is greater than 0.25 and 0.33 or less, the solid electrolyte is at least one selected from the group consisting an oxide solid electrolyte, a sulfide solid electrolyte and an ion-binding solid electrolyte, and at least one portion of a surface of the solid electrolyte is covered with the lithium ion conducting material. Alternatively, the composite active material of the present disclosure comprises a lithium ion conducting material and an active material, the lithium ion conducting material comprises a composite of an electrolytic solution and a polymer, the electrolytic solution comprises a cyclic carbonate as a solvent and a lithium amide salt dissolved in the cyclic carbonate, the molar ratio of the lithium amide salt to the cyclic carbonate is greater than 0.25 and 0.33 or less, and at least one portion of a surface of the active material is covered with the lithium ion conducting material. The solid electrolyte and the active material may be, for example, particulate, as described above. The active material may be a positive electrode active material or a negative electrode active material.

### 5. Method for Manufacturing Lithium Ion Secondary Battery

The lithium ion secondary battery 100 can be manufactured by applying a known method, for example, the following method. However, the method for manufacturing the secondary battery 100 is not limited to the following method, and each layer may be formed by, for example, dry molding.
(1) A positive electrode active material or the like constituting a positive electrode active material layer is dispersed in a solvent to obtain a positive electrode slurry. The solvent used in this case is not particularly limited, and water and various organic solvents can be used. The positive electrode slurry is applied to a surface of a positive electrode current collector using a doctor blade or the like and then dried to form a positive electrode active material layer on the surface of the positive electrode current collector to obtain a positive electrode.
(2) A negative electrode active material or the like constituting a negative electrode active material layer is dispersed in a solvent to obtain a negative electrode slurry. The solvent used in this case is not particularly limited, and water and various organic solvents can be used. The negative electrode slurry is applied to a surface of a negative electrode current collector using a doctor blade or the like and then dried to form a negative electrode active material layer on the surface of the negative electrode current collector to obtain a negative electrode.
(3) The layers are laminated such that an electrolyte layer (solid electrolyte layer or separator) is interposed between the negative electrode and the positive electrode, in the order of negative electrode current collector, negative electrode active material layer, electrolyte layer, positive electrode active material layer, and positive electrode current collector, to obtain a laminated body. Additional members such as terminals are attached to the laminated body as needed.
(4) The laminated body is housed in a battery case. In the case of an electrolytic solution battery, the battery case is filled with an electrolytic solution, the laminated body is immersed in the electrolytic solution, and the laminated body is sealed in the battery case to obtain a secondary battery. In the case of a battery comprising an electrolytic solution, the electrolytic solution may be included in the negative electrode active material layer, the separator, and the positive electrode active material layer in the above step (3).

### 6. Method for Enhancing Lithium Ion Input/Output Characteristics in Lithium Ion Secondary Battery

The technique of the present disclosure also has an aspect relating to a method for enhancing lithium ion input/output characteristics in the lithium ion secondary battery. Specifically, the method of the present disclosure enhances lithium ion input/output characteristics by adopting the lithium ion conducting material of the present disclosure in at least one of the positive electrode active material layer, the electrolyte layer, and the negative electrode active material layer of the lithium ion secondary battery. The details of the configurations of the lithium ion conducting material and the lithium ion secondary battery are as described above.

### 7. Vehicle

As described above, the lithium ion secondary battery of the present disclosure is excellent in lithium ion input/output characteristics, and, for example, even when charge/discharge is repeated, the resistance at the interface between the active material and the lithium ion conducting material is easily kept low. Such a secondary battery can be suitably used in, for example, at least one vehicle selected from hybrid electric vehicles (HEV), plug-in hybrid electric vehicles (PHEV), and battery electric vehicles (BEV). Specifically, the technique of the present disclosure also has an aspect relating to a vehicle having a lithium ion secondary battery, wherein the lithium ion secondary battery comprises a positive electrode active material layer, an electrolyte layer and a negative electrode active material layer, and at least one of the positive electrode active material layer, the electrolyte layer and the negative electrode active material layer comprises the lithium ion conducting material of the present disclosure. The detail of the configuration of the lithium ion secondary battery is as described above.

### EXAMPLES

Hereinafter, the technique of the present disclosure will be described in detail with references to the Examples. However, the technique of the present disclosure is not limited to the following Examples. All the following experiments were carried out in a glove box under an Ar atmosphere at a dew point of -80°C or less and a concentration of oxygen of less than 3 ppm, or in an environment not exposed to air, which was according to the Ar atmosphere.

### 1. Evaluation of Electrolytic Solution

The electrolytic solution constituting the lithium ion conducting material of the present disclosure was evaluated.

### 1.1 Production of Electrolytic Solution

### 1.1.1 Example 1

Propylene carbonate (PC, manufactured by Kishida Chemical Co., Ltd.) as the solvent and lithium bisfluorosulfonylamide (LiFSA, manufactured by Kishida Chemical Co., Ltd.) as the lithium salt were each weighed to obtain a molar ratio of the lithium salt to the solvent of 0.33 (PC:LiFSA = 3:1), and then mixed and stirred to obtain an electrolytic solution for evaluation.

### 1.1.2 Example 2

LiFSA and PC were each weighed to obtain a molar ratio of LiFSA to PC of 0.29 (PC:LiFSA = 3.5:1), and then mixed and stirred to obtain an electrolytic solution for evaluation.

### 1.1.3 Example 3

LiFSA and PC were each weighed to obtain a molar ratio of LiFSA to PC of 0.26 (PC:LiFSA = 3.8:1), and then mixed and stirred to obtain an electrolytic solution for evaluation.

### 1.1.4 Example 4

Except that lithium bistrifluoromethanesulfonylamide (LiTFSA, manufactured by Kishida Chemical Co., Ltd.) was used in place of LiFSA, an electrolytic solution for evaluation was obtained in the same manner as in Example 1.

### 1.1.5 Example 5

Except that LiTFSA was used in place of LiFSA, an electrolytic solution for evaluation was obtained in the same manner as in Example 2.

### 1.1.6 Example 6

Except that LiTFSA was used in place of LiFSA, an electrolytic solution for evaluation was obtained in the same manner as in Example 3.

### 1.1.7 Example 7

Except that a mixed solvent of PC and ethylene carbonate (EC, manufactured by Kishida Chemical Co., Ltd.) (mixed to obtain a molar ratio of PC to EC (PC:EC) = 1:2) was used in place of the PC-only solvent, an electrolytic solution for evaluation was obtained in the same manner as in Example 1.

### 1.1.8 Comparative Example 1

LiFSA and PC were each weighed to obtain a molar ratio of LiFSA to PC of 0.08 (PC:LiFSA = 11.8:1), and then mixed and stirred to obtain an electrolytic solution for evaluation.

### 1.1.9 Comparative Example 2

LiFSA and PC were each weighed to obtain a molar ratio of LiFSA to PC of 0.25 (PC:LiFSA = 4:1), and then mixed and stirred to obtain an electrolytic solution for evaluation.

### 1.1.10 Comparative Example 3

Except that LiTFSA was used in place of LiFSA, an electrolytic solution for evaluation was obtained in the same manner as in Comparative Example 1.

### 1.1.11 Comparative Example 4

Except that LiTFSA was used in place of LiFSA, an electrolytic solution for evaluation was obtained in the same manner as in Comparative Example 2.

### 1.1.12 Comparative Example 5

Except that dimethyl carbonate (DMC, manufactured by Kishida Chemical Co., Ltd.) was used in place of PC, an electrolytic solution for evaluation was obtained in the same manner as in Example 1.

### 1.1.13 Comparative Example 6

Except that a mixed solvent of DMC and EC (mixed to obtain a molar ratio of DMC to EC (DMC:EC) = 1:2) was used in place of the PC-only solvent, an electrolytic solution for evaluation was obtained in the same manner as in Example 1. In the electrolytic solution of Comparative Example 6, the molar ratio of LiFSA to EC was 0.50 (EC:LiFSA=2:1).

### 1.1.14 Comparative Example 7

Except that lithium hexafluorophosphate (LiPF6, manufactured by Kishida Chemical Co., Ltd.) was used in place of LiFSA, an electrolytic solution for evaluation was obtained in the same manner as in Example 1.

### 1.1.15 Comparative Example 8

Tetraglyme (G4, manufactured by Kishida Chemical Co., Ltd.) as the solvent and LiTFSA were each weighed to obtain a molar ratio of LiFSA to tetraglyme of 1.25 (G4:LiTFSA = 8:10), and then mixed and stirred to obtain an electrolytic solution for evaluation.

### 1.2 Method for Evaluating Electrolytic Solution

### 1.2.1 Evaluation of Heat Resistance

A TG-DTA test was carried out on each electrolytic solution at a temperature increase rate of 10°C/min, and the 0.5 wt% weight-loss temperature (T_{-0.5 wt%}), at which it can be determined that the liquid component has volatilized, was measured. It is considered that the higher the temperature, the more excellent the heat resistance (thermal stability). The results are shown in FIG. 2.

### 1.2.2 Evaluation of Ion Conductivity and Lithium Ion Transference Number (tLi⁺)

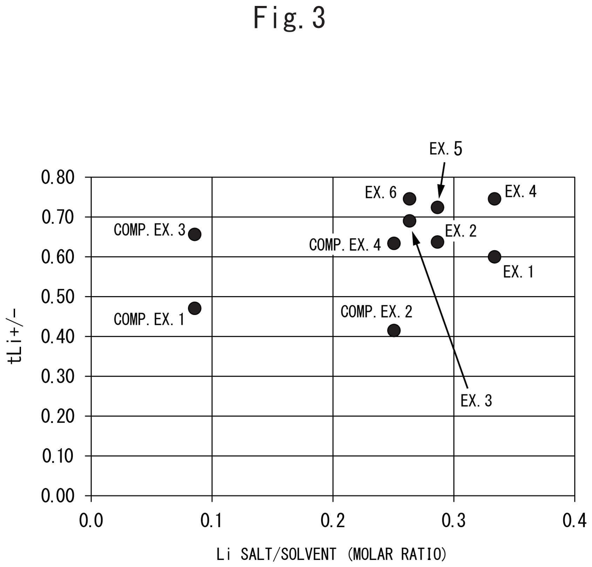

In a bipolar target cell wherein Li metal is used for the electrodes and the distance between electrodes is fixed, the ionic conductivity is determined by a complex impedance method at 25°C, and the lithium ion transference number is determined by the Bruce method (Bruce et al. Solid State Ionics 28-30, 1987, 918-922), which combines direct current polarization and impedance methods. The results for the lithium ion transference number are shown in FIG. 3.

### 1.2.3 Evaluation of Lithium Ion Conductivity

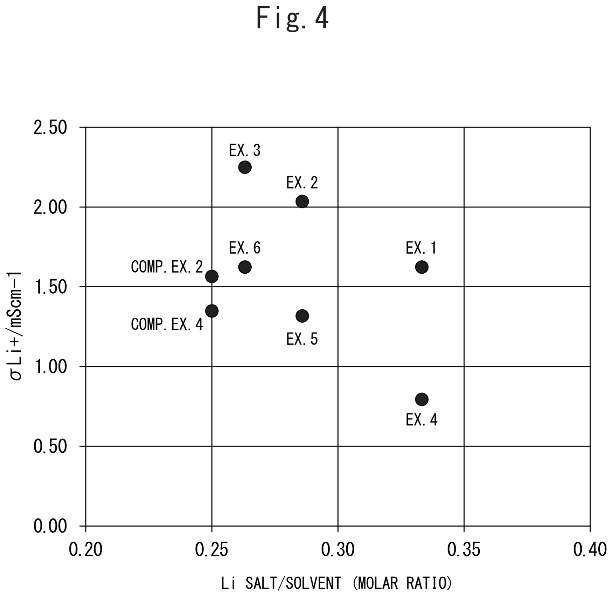

The lithium ion transference number and the ionic conductivity obtained from the above electrochemical method were multiplied by each other to evaluate the lithium ionic conductivity. The results are shown in FIG. 4.

### 1.2.4 Evaluation of Reactivity with Sulfide Solid Electrolyte

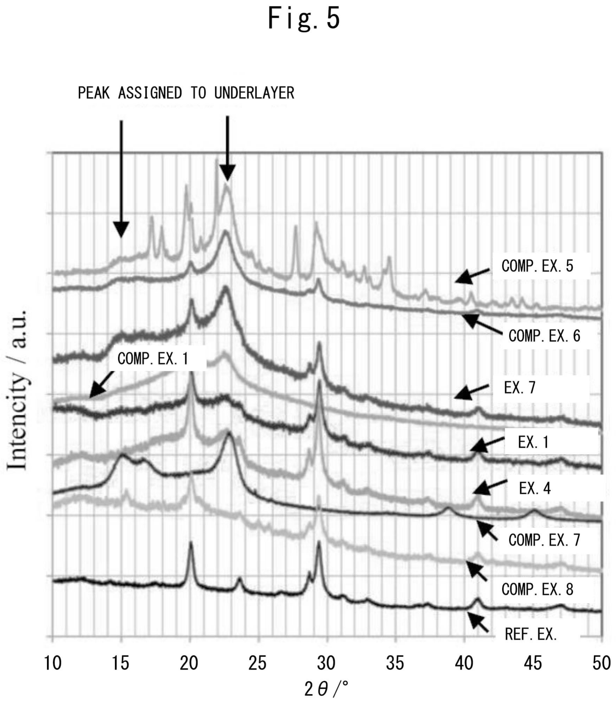

A sulfide solid electrolyte having a composition of 75(75Li₂S·25P₂S₅)·10LiI·15LiBr (numbers in unit of mol%) was immersed in each electrolytic solution for 2 months, X-ray diffraction measurements of the sulfide solid electrolyte were taken before and after immersion, and changes in the X-ray diffraction spectrum were confirmed. The results are shown in FIG. 5.

### 1.3 Evaluation Results of Electrolytic Solution

### 1.3.1 Regarding Heat Resistance

The following was revealed from the results shown in FIG. 2. When the molar ratio of the lithium salt to the solvent is less than 0.1 as in Comparative Example 1, heat resistance is about the same as when the lithium salt is not included. In other words, the heat resistance improvement effect of dissolving the lithium salt in the solvent cannot be confirmed. When the molar ratio is 0.25 as in Comparative Examples 2 and 4, heat resistance is slightly improved. When the molar ratio is greater than 0.25 as in Examples 1 and 4, heat resistance is remarkably improved.

### 1.3.2 Regarding Lithium Ion Conductive Properties

### 1.3.2.1 Regarding Lithium Ion Transference Number

The following was revealed from the results shown in FIG. 3. In comparison to the cases where the molar ratio of the lithium salt to the solvent is 0.25 or less as in Comparative Examples 1 to 4, when the molar ratio is greater than 0.25 as in Examples 1 to 6, the lithium ion transference number is remarkably increased. On the other hand, as far as the present inventors have confirmed, when the molar ratio of the lithium salt to the solvent is excessive, viscosity becomes too high (for example, becomes solid at room temperature), and lithium ion conductive properties are likely to deteriorate. As long as the molar ratio of the lithium salt to the solvent is greater than 0.25 and 0.33 or less as in Examples 1 to 6, such a problem does not occur.

### 1.3.2.2 Regarding Lithium Ion Conductivity

The following was revealed from the results shown in FIG. 4. Normally, as the concentration of lithium salt in the solvent increases, there is a concern that ionic conductivity decreases due to an increase in viscosity. However, in Examples 1 to 6, even as the viscosity increases, the lithium ion transference number described above increases, thereby easily ensuring high lithium ionic conductivity.

As described above, it is considered that the electrolytic solutions (Examples 1 to 6) wherein the molar ratio of the lithium amide salt to the cyclic carbonate is greater than 0.25 and 0.33 or less have an excellent balance of heat resistance and lithium ion conductive properties over the electrolytic solutions (Comparative Examples 1 to 4) wherein the molar ratio is 0.25 or less. Additionally, as far as the present inventors have confirmed, due to the presence of a large amount of a solvent other than a cyclic carbonate (for example, a chain carbonate) as in Comparative Example 6, the amount of cyclic carbonate is relatively decreased, and as a result, the concentration of Li salt to the cyclic carbonate becomes relatively excessive, whereby heat resistance of the electrolytic solution tends to decrease.

### 1.3.3 Regarding Reactivity with Sulfide Solid Electrolyte

The following was revealed from the results shown in FIG. 5. In FIG. 5, the X-ray diffraction peak pattern of the sulfide solid electrolyte after immersion in each electrolytic solution for Examples 1, 4, and 7 does not substantially change from that of the sulfide solid electrolyte (Reference Example) before immersion. However, the X-ray diffraction peak pattern of the sulfide solid electrolyte after immersion in each electrolytic solution for Comparative Examples 5 to 8 significantly changes from that of the sulfide solid electrolyte (Reference Example) before immersion. From this, it is considered that the reactivity between the electrolytic solution and the sulfide solid electrolyte varies depending on the type and polarity of the solvent constituting the electrolytic solution and the type of anion in the lithium salt. It is considered that, for example, when a chain carbonate, not a cyclic carbonate, is used as the solvent as in Comparative Example 5, or when a large amount of a chain carbonate is used together with a cyclic carbonate as the solvent (as a result, the molar ratio of the lithium salt to the cyclic carbonate becomes excessive) as in Comparative Example 6, the chain carbonate easily enters into a free state, active sites of the chain carbonate react with the sulfide solid electrolyte, and the sulfide solid electrolyte is altered or deteriorates. The same occurs when G4 is used as the solvent as in Comparative Example 8. Further, it is considered that when LiPF6, not a lithium amide salt, is used as the lithium salt as in Comparative Example 7, PF6 anions react with the sulfide solid electrolyte, and the sulfide solid electrolyte is altered or deteriorates.

### 1.4. Overview

From the above results, it is considered that an electrolytic solution having the following features (1) and (2) has excellent thermal stability and lithium ion conductive properties.
(1) The electrolytic solution comprises a cyclic carbonate as a solvent and lithium amide salt dissolved in the cyclic carbonate.
(2) The molar ratio of the lithium amide salt to the cyclic carbonate is greater than 0.25 and 0.33 or less.
   The electrolytic solution having the features (1) and (2) can also be used in combination with a sulfide solid electrolyte. Particularly, it is considered that an electrolytic solution having the following feature (3) not only can exert the above effects, but also can suppress degradation of a sulfide solid electrolyte.
(3) The lithium amide salt is at least one of lithium bisfluorosulfonylamide and lithium bistrifluoromethanesulfonylamide.

### 2. Evaluation of Lithium Ion Conducting Material (Composite of Electrolytic Solution and Polymer)

The effect by formation of a composite of an electrolytic solution and a polymer was confirmed.

### 2.1 Production of Evaluation Sample

### 2.1.1 Example I

Propylene carbonate (PC, cyclic carbonate, manufactured by Kishida Chemical Co., Ltd.), lithium bisfluorosulfonylamide (LiFSA, lithium amide salt, manufactured by Kishida Chemical Co., Ltd.), a fluoride-based polymer (copolymer of polyvinylidene fluoride and hexafluoropropylene, manufactured by Kureha Corporation, weight average molecular weight: 670,000), and dimethyl carbonate (DMC, manufactured by Kishida Chemical Co., Ltd.) as the diluent were used, weighed and mixed so that the molar ratio of LiFSA to PC was 0.33, the proportion of the polymer in the total of PC, LiFSA and the polymer was 25% by mass, and the weight of the diluent was 8 times that of the polymer, and heated and stirred to obtain a uniform solution. The solution obtained was formed into a film by casting at 60°C and thereafter the diluent was dried and volatilized to obtain a sheet-shaped lithium ion conducting material (composite of an electrolytic solution and the polymer) as an evaluation sample. The lithium ion conducting material was a solid at 25°C, and did not have fluidity. A free electrolytic solution from the lithium ion conducting material was also not confirmed.

### 2.1.2 Comparative Example I

An electrolytic solution (weighed and mixed so that the molar ratio of LiFSA to PC was 0.33) was directly used as an evaluation sample without formation of a composite with the polymer.

### 2.1.3 Comparative Example II

Except that the concentration of LiFSA in the electrolytic solution was changed to 1 M, the electrolytic solution was directly used as an evaluation sample without formation of a composite with the polymer, in the same manner as in Comparative Example I.

### 2.2 Cyclic Voltammetry (CV) Test and Charge/Discharge Test

A two-electrode cell was formed with a Si wafer as a working electrode and a Li metal as a counter electrode also serving as a reference electrode. The electrode area is φ16 mm. In the two-electrode cell, the evaluation sample was placed between the working electrode and the counter electrode, and evaluation was performed at 25°C. A CV test was carried out at a sweep speed of 1 mV/s. A charge/discharge test included charge at 0.1 V for 10 h and discharge at 0.5 V for 10 h, and this charge/discharge was performed for 10 cycles. After each charge and after each discharge, the impedances were measured, and the electrode interface resistances were measured. The interface resistance of the Li metal was determined as the Si interface resistance obtained by evaluating a Li metal symmetrical cell in advance and subtracting the Li metal interface resistance from the electrode interface resistance.

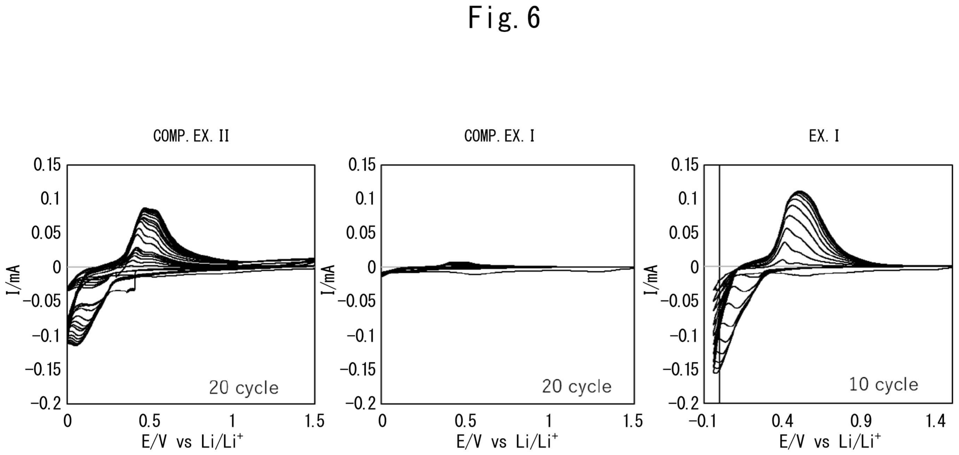

FIG. 6 shows CV test results. As shown in FIG. 6, it was found that impurities on a Si surface were removed and alloying/dealloying of Si with Li progressed around 0.3 to 0.4 V in Example I. Comparative Example I in which the electrolytic solution was used singly without formation of a composite with the polymer exhibited low activity, whereas Example I in which a composite with the polymer was formed exhibited a large oxidation/reduction current, and a dramatical enhancement effect of reaction activity was confirmed. The reaction activity in Example I was high even when compared with that in Comparative Example II in which the electrolytic solution had a general concentration, and a remarkable and special effect by formation of a composite of the electrolytic solution with the polymer was confirmed.

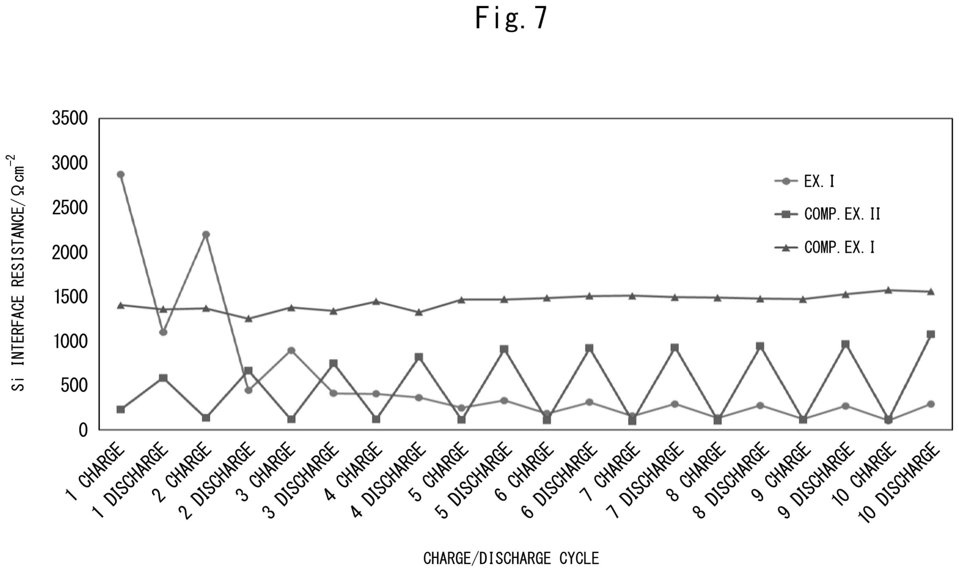

FIG. 7 shows results of the change in resistance at a Si interface during charge/discharge cycles. In Comparative Example II, an increase in resistance, considered to correspond to the growth of a film of SEI according to decomposition of an electrolytic solution, commonly known, was confirmed depending on an increase in the number of cycles. On the other hand, in Comparative Example I in which the concentration of lithium amide salt was high, an increase in resistance according to the growth of SEI could not be confirmed, but a high-resistance state was kept from the initial period. On the other hand, in Example I in which the concentration of lithium amide salt in the electrolytic solution was high and a composite of the electrolytic solution with the polymer was formed, it was revealed that the resistance was increased due to poor adhesiveness with an electrode during the initial period of cycle, but not only an increase in number of cycles, but also a remarkable reduction in Si interface resistance was confirmed during and after the third cycle, and the interface resistance was smaller than that of an electrolytic solution having a general lithium salt concentration. From these results, it can be seen that use of a predetermined composite of an electrolytic solution and a polymer, as a lithium ion conducting material in a lithium ion secondary battery, allows lithium ion input/output characteristics to be improved by, for example, suppression of growth of SEI at an interface between an active material and the lithium ion conducting material.

### 2.3 Evaluation by XPS

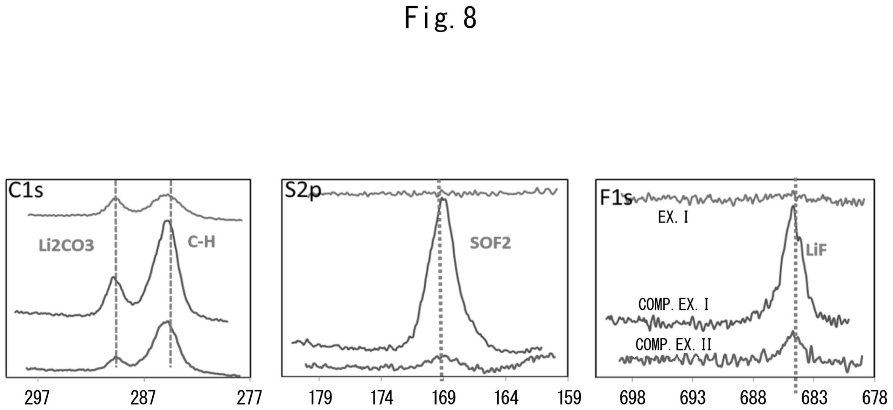

In order to confirm the validity of discussion about CV test results and charge/discharge test results, each Si electrode surface after 10 charge/discharge cycles was observed by XPS. The results are shown in FIG. 8. As shown in FIG. 8, a component derived from anions and decomposed products was detected in both Comparative Examples I and II. In Example I, a component considered to be derived from anions and decomposed products was not detected, and it could be confirmed that SEI did not grow on the Si electrode surface.

### 2.4 Supplements

A case in which PC is adopted as the cyclic carbonate constituting the electrolytic solution, LiFSA is adopted as the lithium amide salt constituting the electrolytic solution, and a predetermined fluoride-based polymer is adopted as the polymer for formation of a composite with the electrolytic solution is exemplified in Examples above, but the technique of the present disclosure is not limited to such a mode. Even when any other cyclic carbonate, lithium amide salt, and polymer than these are adopted, the same effects can be expected.

In addition, lithium ion input/output characteristics to Si are evaluated in Examples above, but the lithium ion conducting material of the present disclosure is considered to be similarly excellent in lithium ion input/output characteristics to other materials. Specifically, it is considered that a predetermined electrolytic solution is formed into a composite with a polymer, thereby, for example, inhibiting the electrolytic solution from being free, to allow reaction between an electrolytic solution and a battery material to be suppressed and allow growth of SEI to be suppressed.

### 2.5 Conclusion

From the above results, it is considered that a lithium ion conducting material having the following features (A) to (C) is excellent in lithium ion input/output characteristics. It is also considered that the lithium ion conducting material is also excellent in lithium ion conductive properties and thermal stability as described above.
(A) The lithium ion conducting material comprises a composite of an electrolytic solution and a polymer.
(B) The electrolytic solution comprises a cyclic carbonate as a solvent and a lithium amide salt dissolved in the cyclic carbonate.
(C) The molar ratio of the lithium amide salt to the cyclic carbonate is greater than 0.25 and 0.33 or less.
   The lithium ion conducting material having the features (A) to (C) can also be used in combination with a sulfide solid electrolyte. Particularly, it is considered that a lithium ion conducting material having one or both of the following features (D) and (E) not only can exert the above effects, but also can suppress degradation of a sulfide solid electrolyte.
(D) The polymer is a fluoride-based polymer.
(E) The lithium amide salt is at least one of lithium bisfluorosulfonylamide and lithium bistrifluoromethanesulfonylamide.

### REFERENCE SIGNS LIST

10 Positive electrode current collector
20 Positive electrode active material layer
30 Electrolyte layer
40 Negative electrode active material layer
50 Negative electrode current collector
100 Lithium ion secondary battery

## Claims

1. A lithium ion conducting material, comprising a composite of an electrolytic solution and a polymer, wherein
the electrolytic solution comprises a cyclic carbonate as a solvent and a lithium amide salt dissolved in the cyclic carbonate, and
a molar ratio of the lithium amide salt to the cyclic carbonate is greater than 0.25 and 0.33 or less.

2. The lithium ion conducting material according to claim 1, wherein the polymer is a fluoride-based polymer.

3. The lithium ion conducting material according to claim 1 or 2, comprising the composite and a sulfide solid electrolyte.

4. The lithium ion conducting material according to any one of claims 1 to 3, wherein the cyclic carbonate is at least one of propylene carbonate and ethylene carbonate.

5. The lithium ion conducting material according to any one of claims 1 to 4, wherein the lithium amide salt is at least one of lithium bisfluorosulfonylamide and lithium bistrifluoromethanesulfonylamide.

6. A lithium ion secondary battery, comprising a positive electrode active material layer, an electrolyte layer, and a negative electrode active material layer, wherein
at least one of the positive electrode active material layer, the electrolyte layer and the negative electrode active material layer comprises the lithium ion conducting material according to any one of claims 1 to 5.

7. The lithium ion secondary battery according to claim 6, wherein at least the negative electrode active material layer comprises the lithium ion conducting material.

8. The lithium ion secondary battery according to claim 6 or 7, wherein the negative electrode active material layer comprises Si as a negative electrode active material.

9. A method for manufacturing a lithium ion conducting material, comprising forming a composite of an electrolytic solution and a polymer, wherein
the electrolytic solution comprises a cyclic carbonate as a solvent and a lithium amide salt dissolved in the cyclic carbonate, and
a molar ratio of the lithium amide salt to the cyclic carbonate is greater than 0.25 and 0.33 or less.

10. The manufacturing method according to claim 9, comprising:
mixing a diluent with the electrolytic solution and the polymer to obtain a solution; and
removing the diluent from the solution to form the composite of the electrolytic solution and the polymer.
